# DEMANDE DE BREVET EUROPEEN

(11) **EP 4 636 369 A1**
(43) Date de publication de la demande: **22.10.2025**
(21) Numéro de dépôt: 25170880.6
(22) Date de dépôt: 16.04.2025
(51) Int. Cl.: G01J 3/02, G01J 3/18, G01J 3/28

(54) **SPECTROMÈTRE**

(30) Priorité: 18.04.2024 FR 2404039
(71) Demandeur: THALES, 92190 Meudon (FR)
(72) Inventeur: TETAZ, Nicolas, 06156 Cannes La Bocca Cedex (FR)
(74) Mandataire: Lavoix

(57) **Abrégé**

La présente invention concerne un spectromètre (10) comprenant :
- une fente (12) propre à recevoir un faisceau lumineux,
- un détecteur (14),
- un réseau de diffraction (16) présentant au moins une courbure,
- une lentille aller (18) propre à envoyer le faisceau lumineux issu de la fente (12) sur le réseau de diffraction (16) de sorte à obtenir une pluralité de faisceaux diffractés,
- un miroir de renvoi (20) propre à réfléchir la pluralité de faisceaux diffractés, et
- une lentille retour (22) propre à recevoir la pluralité de faisceaux diffractés réfléchis et à les focaliser sur le détecteur (14),
au moins une optique, dite optique optimisée, parmi la lentille aller (18), le miroir de renvoi (20) et la lentille retour (22), ayant été optimisée de sorte à améliorer la qualité image de l'image générée par le détecteur (14) à partir de la pluralité de faisceaux diffractés.

## Description

La présente invention concerne un spectromètre. La présente invention concerne aussi un procédé de conception optique associé.

Un spectromètre fonctionne sur le principe suivant : une fente est placée au foyer d'un collimateur qui image cette fente à l'infini. Un disperseur (prisme ou réseau) sépare spectralement le faisceau issu du collimateur, puis une optique imageur focalise ces faisceaux spectraux sur un détecteur.

La difficulté consiste à effectuer ces différentes opérations avec une qualité d'image suffisante, mais de nombreuses solutions optiques existent. La compacité du spectromètre est un critère majeur : on cherche à être le plus compact possible, notamment pour les applications aéroportées.

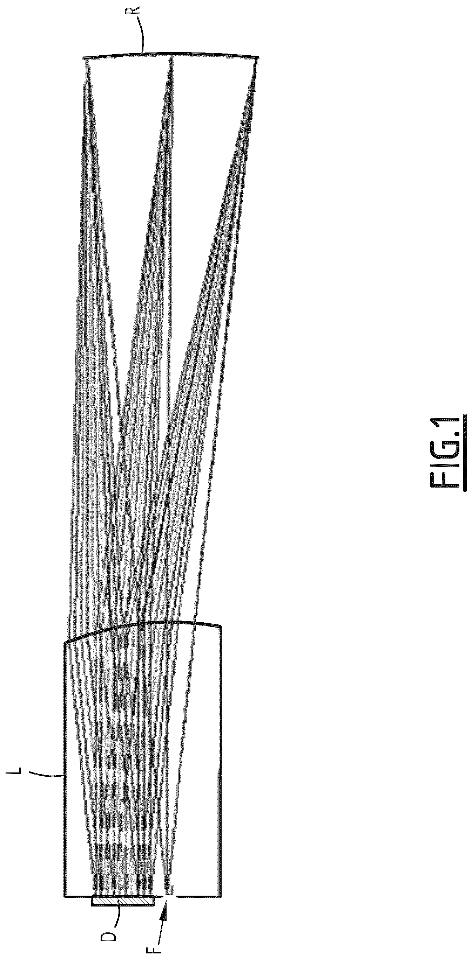

Il existe de nombreux type de spectromètres, mais la solution optique la plus compact à ce jour est le spectromètre de type Dyson dont un exemple de configuration est illustré par la figure 1. Comme illustré par la figure 1, un spectromètre de type Dyson comprend une fente F, un détecteur D, une unique lentille L et un réseau R directement déposé sur un miroir de puissance. L'unique lentille L est utilisée en double passage pour le faisceau issu de la fente, et ceux à destination du détecteur. Ces dernières années, la compacité du Dyson a encore été repoussée par l'utilisation de la technologie Freeform pour la lentille unique et le réseau.

Néanmoins, la réalisation du réseau est complexe, encore plus si l'on rajoute une composante Freeform sur le substrat du réseau. En outre, l'intégration du détecteur près de la fente du Dyson est mécaniquement complexe. Enfin, de par sa configuration, un spectromètre Dyson est limité à un grandissement de 1, ce qui est contraignant pour certaines applications.

Il existe donc un besoin pour un spectromètre moins complexe à réaliser et à intégrer mécaniquement, tout en restant compact et avec une bonne qualité image.

A cet effet, l'invention a pour objet un spectromètre comprenant :
- une fente propre à recevoir un faisceau lumineux,
- un détecteur,
- un réseau de diffraction présentant au moins une courbure,
- une lentille aller propre à envoyer le faisceau lumineux issu de la fente sur le réseau de diffraction de sorte à obtenir une pluralité de faisceaux diffractés,
- un miroir de renvoi propre à réfléchir la pluralité de faisceaux diffractés, et
- une lentille retour propre à recevoir la pluralité de faisceaux diffractés réfléchis par le miroir de renvoi et à focaliser la pluralité de faisceaux diffractés sur le détecteur, au moins une optique, dite optique optimisée, parmi la lentille aller, le miroir de renvoi et la lentille retour, ayant été optimisée de sorte à améliorer la qualité image de l'image générée par le détecteur à partir de la pluralité de faisceaux diffractés.

Suivant d'autres aspects avantageux de l'invention, le spectromètre comprend une ou plusieurs des caractéristiques suivantes, prises isolément ou suivant toutes les combinaisons techniquement possibles :
- la lentille aller, le réseau de diffraction, le miroir de renvoi et la lentille retour sont les seules optiques du spectromètre, et le réseau de diffraction est un réseau de diffraction en réflexion ;
- la ou chaque optique optimisée est une optique Freeform ;
- le spectromètre comprend deux optiques optimisées ;
- au moins une optique optimisée est le miroir de renvoi ;
- au moins une optique optimisée est la lentille retour ;
- la lentille aller est une lentille sphérique ;
- le réseau de diffraction est sphérique ;
- la lentille aller et la lentille retour présentent des puissances différentes de sorte que le grandissement du spectromètre est différent de un ;
- la puissance de chacune de la lentille aller et de la lentille retour est choisie de sorte que le grandissement du spectromètre soit compris entre 0,2 et 5.

L'invention concerne également un procédé de conception optique d'un spectromètre tel que décrit précédemment, le procédé étant mis en œuvre par ordinateur au moyen d'un outil de conception optique, le procédé comprenant :
- le chargement, dans l'outil de conception optique, d'un spectromètre de type Dyson comprenant :
   - une fente propre à recevoir un faisceau lumineux,
   - un détecteur,
   - un réseau de diffraction présentant au moins une courbure,
   - une lentille à double passage propre à, d'une part, envoyer le faisceau lumineux issu de la fente sur le réseau de diffraction de sorte à obtenir une pluralité de faisceaux diffractés, et d'autre part, à focaliser la pluralité de faisceaux diffractés sur le détecteur,
- le dédoublement de la lentille à double passage de sorte à obtenir :
   - une lentille aller propre à envoyer le faisceau lumineux issu de la fente sur le réseau de diffraction pour obtenir une pluralité de faisceaux diffractés, et
   - une lentille retour propre à focaliser la pluralité de faisceaux diffractés sur le détecteur,
- l'ajout d'un miroir de renvoi,
- le réagencement de la lentille aller, de la lentille retour et du miroir de renvoi de sorte à séparer spatialement la fente et le détecteur et à ce que le miroir de renvoi soit propre à réfléchir la pluralité de faisceaux diffractés vers la lentille retour,
- l'optimisation d'au moins une optique, dite optique optimisée, parmi la lentille aller, le miroir de renvoi et la lentille retour, de sorte à améliorer la qualité image de l'image générée par le détecteur à partir de la pluralité de faisceaux diffractés, et
- le réagencement de la fente, du détecteur, du réseau de diffraction, de la lentille aller, de la lentille retour et du miroir de renvoi pour obtenir un spectromètre aménageable mécaniquement.

L'invention apparaîtra plus clairement à la lecture de la description qui va suivre, donnée uniquement à titre d'exemple non limitatif, et faite en référence aux dessins dans lesquels :
la figure 1 est un exemple d'un spectromètre de type Dyson de l'état de la technique, et

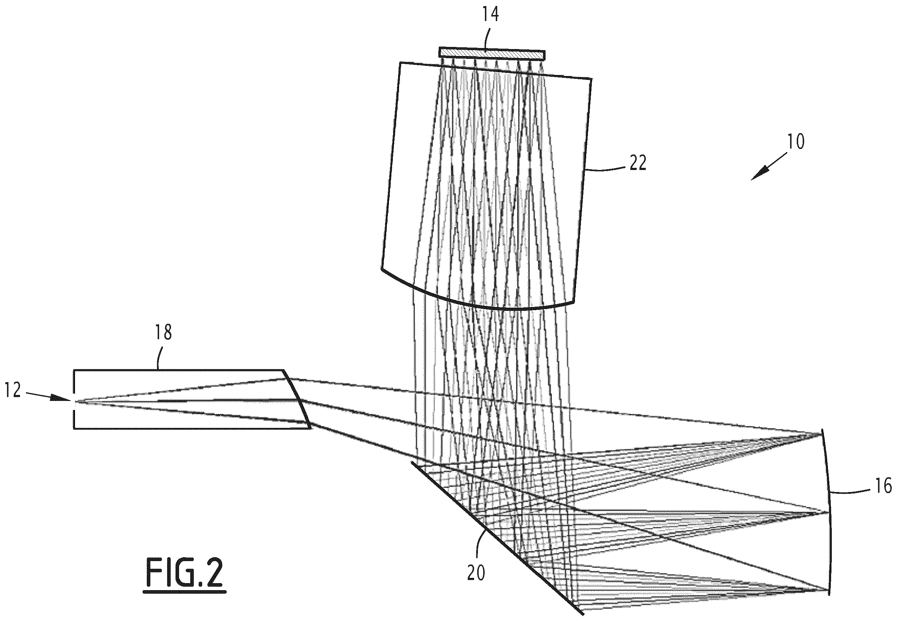

la figure 2 est un exemple d'un spectromètre selon l'invention.

Un spectromètre 10 est illustré par la figure 1.

Comme illustré sur cette figure, le spectromètre 10 comprend une fente 12, un détecteur 14, un réseau de diffraction 16, une lentille aller 18, un miroir de renvoi 20 et une lentille retour 22.

Préférentiellement, la lentille aller 18, le réseau de diffraction 16, le miroir de renvoi 20 et la lentille retour 22 sont les seules optiques du spectromètre 10.

En outre, le réseau de diffraction est avantageusement un réseau de diffraction en réflexion, tel que représenté sur la figure 1.

La fente 12 est propre à recevoir un faisceau lumineux. La fente 12 a par exemple une longueur inférieure ou égale à 20 millimètres (mm), de préférence inférieure ou égale à 15 mm.

Le faisceau lumineux est, par exemple, dans le domaine du visible (par exemple 380 à 780 nm). En variante ou en complément, le faisceau lumineux s'étend aussi dans la gamme ultraviolet (100 à 380 nm) ou dans la gamme infrarouge (780 nm à 100 µm).

Le détecteur 14 est propre à détecter un faisceau lumineux arrivant sur le détecteur 14. En particulier, le détecteur 14 est propre à détecter les spectres lumineux et à mesurer l'intensité lumineuse en fonction de la longueur d'onde.

Le réseau de diffraction 16 est propre à diffracter un faisceau incident en une pluralité de faisceaux diffractés. Les faisceaux diffractés sont séparés spectralement.

De préférence, le réseau de diffraction 16 est sphérique. Par exemple, le réseau de diffraction 16 est gravé sur un miroir sphérique.

En alternative, le réseau de diffraction 16 est asphérique ou réalisé selon la technologie Freeform. Une optique Freeform est une optique qui ne possède ni axe, ni centre de symétrie, ce qui permet un plus grand nombre de degrés de liberté lors de la conception optique.

La lentille aller 18 est propre à envoyer le faisceau lumineux issu de la fente 12 sur le réseau de diffraction 16 de sorte à obtenir une pluralité de faisceaux diffractés.

De préférence, la lentille aller 18 est une lentille sphérique.

Le miroir de renvoi 20 est propre à réfléchir la pluralité de faisceaux diffractés.

La lentille retour 22 est propre à recevoir la pluralité de faisceaux diffractés réfléchis par le miroir de renvoi 20 et à focaliser la pluralité de faisceaux diffractés sur le détecteur 14.

Au moins une optique, dite optique optimisée, parmi la lentille aller 18, le miroir de renvoi 20 et la lentille retour 22, a été optimisée de sorte à améliorer la qualité image de l'image générée par le détecteur 14 à partir de la pluralité de faisceaux diffractés. Par améliorer la qualité image, on entend la réduction d'aberrations (par rapport à une configuration non optimisée).

De préférence, la ou chaque optique optimisée est une optique Freeform.

De préférence, le spectromètre 10 comprend deux optiques optimisées.

De préférence, au moins une optique optimisée est le miroir de renvoi 20.

De préférence, au moins une optique optimisée est la lentille retour 22.

Ainsi, dans un mode de réalisation préféré :
- la lentille aller 18 est une lentille sphérique,
- le réseau de diffraction 16 est sphérique,
- le miroir de renvoi 20 est Freeform, et
- la lentille retour 22 est Freeform.

Dans ce mode préféré, la fente 12 et le détecteur 14 se situent chacun de préférence proche du centre de courbure de la lentille aller 18, du réseau de diffraction 16 et de la lentille retour 22.

Dans ce mode de réalisation, le miroir de renvoi 20 permet de séparer mécaniquement fente 12 et détecteur 14, et surtout par l'ajout d'une surface Freeform, permet de corriger les aberrations limitantes (principalement l'astigmatisme).

Dans un exemple de réalisation, la lentille aller 18 et la lentille retour 22 présentent des puissances différentes de sorte que le grandissement du spectromètre 10 est différent de un.

Dans un exemple de réalisation, la puissance de chacune de la lentille aller 18 et de la lentille retour 22 est choisie de sorte que le grandissement du spectromètre 10 soit compris entre 0,2 et 5.

Un exemple d'un procédé de conception du spectromètre 10 va maintenant être décrit. Un tel procédé de conception optique est mis en œuvre par ordinateur au moyen d'un outil de conception optique. L'outil de conception optique est, par exemple, le logiciel Zemax.

Le procédé de conception comprend une étape de chargement, dans l'outil de conception optique, d'un spectromètre de type Dyson, tel que celui illustré par la figure 1. Un tel spectromètre de type Dyson comprend :
- une fente F propre à recevoir un faisceau lumineux,
- un détecteur D,
- un réseau de diffraction R présentant au moins une courbure, et
- une lentille L à double passage propre à, d'une part, envoyer le faisceau lumineux issu de la fente F sur le réseau de diffraction R de sorte à obtenir une pluralité de faisceaux diffractés, et d'autre part, à focaliser la pluralité de faisceaux diffractés sur le détecteur D.

Le procédé de conception comprend une étape de dédoublement de la lentille L à double passage de sorte à obtenir :
- une lentille aller 18 propre à envoyer le faisceau lumineux issu de la fente F sur le réseau de diffraction R pour obtenir une pluralité de faisceaux diffractés, et
- une lentille retour 22 propre à focaliser la pluralité de faisceaux diffractés sur le détecteur D.

Le procédé de conception comprend une étape d'ajout d'un miroir de renvoi 20. L'étape d'ajout peut être réalisée avant l'étape de dédoublement, ou les deux étapes peuvent être réalisées simultanément.

Le procédé de conception comprend une étape de réagencement de la lentille aller 18, de la lentille retour 22 et du miroir de renvoi 20 de sorte à séparer spatialement la fente F et le détecteur D et à ce que le miroir de renvoi 20 soit propre à réfléchir la pluralité de faisceaux diffractés vers la lentille retour 22.

Le procédé de conception comprend une étape d'optimisation d'au moins une optique, dite optique optimisée, parmi la lentille aller 18, le miroir de renvoi 20 et la lentille retour 22, de sorte à améliorer la qualité image de l'image générée par le détecteur D à partir de la pluralité de faisceaux diffractés.

Comme expliqué précédemment, l'optique optimisée est par exemple une optique rendue Freeform. La ou les optiques optimisées sont de préférence le miroir de renvoi 20 et/ou la lentille retour 22.

Le procédé de conception comprend une étape de réagencement de la fente F, du détecteur D, du réseau de diffraction R, de la lentille aller 18, de la lentille retour 22 et du miroir de renvoi 20 pour obtenir un spectromètre 10 aménageable mécaniquement.

Ainsi, de par sa configuration, le spectromètre 10 s'affranchit d'un réseau nécessairement Freeform (le réseau pouvant être sphérique ou asphérique par exemple), tout en présentant une compacité similaire à celle d'un Dyson et une bonne qualité image. Notamment, la correction de la qualité image (notamment d'astigmatisme) se fait par la position de la fente F. La correction du trèfle résultant se fait par modification de la lentille retour 22 (qui devient différente de la lentille aller 18)

En particulier, des simulations ont été réalisées pour le mode de réalisation préféré pour lequel la lentille aller 18 est une lentille sphérique, le réseau de diffraction 16 est sphérique, le miroir de renvoi 20 est Freeform et la lentille retour 22 est Freeform. Ces simulations montrent que la qualité d'imagerie est améliorée de 60 % par rapport à un spectromètre de type Dyson actuel.

Un tel spectromètre 10 permet, en outre, de séparer fente et détecteur, ce qui facilite l'intégration mécanique des différents éléments, et notamment celle du détecteur avec son électronique.

Enfin, une variante intéressante peut être obtenue du fait que les lentilles aller et retour ont été séparées : le grandissement du spectromètre peut s'éloigner de 1. En effet, la symétrie liée au grandissement de 1 et la construction du Dyson avec un centre de courbure commun permettent de supprimer naturellement certaines aberrations (aberrations sphériques, coma, courbure de Ptezval). En brisant cette symétrie et le grandissement de 1, la solution devient moins favorable pour la correction des aberrations. Cependant, le gain apporté par la liberté sur la fente et la position de la lentille retour 22 permet de s'éloigner du grandissement de 1 tout en conservant une qualité image intéressante. Ceci n'aurait pas été possible avec une solution de type Dyson classique ou Dyson réseau Freeform.

Le choix de modifier le grandissement (dans une plage x0.2 - x5) peut être très intéressant dans le dimensionnement total de l'instrument télescope et spectromètre. Habituellement, le seule moyen de jouer sur ce grandissement tout en restant relativement compact, est d'utiliser un spectromètre de type Offner mais qui n'a pas la compacité d'un Dyson.

Un tel spectromètre peut être utilisé pour de nombreuses applications hyperspectrales. Un tel spectromètre est particulièrement adapté pour être utilisé sur un satellite en mode « push broom ». Notamment, du fait de sa compacité, le spectromètre 10 peut être aménagé sur des petits satellites. On nomme instrument hyperspectraux, les instruments optiques permettant d'imager une scène dans plusieurs domaines spectraux, (par exemple imager une scène visible dans 100 domaines spectraux de 4nm de largeur). Ceci peut amener à faire ressortir de nombreuses informations : décamouflages de cibles militaires, détermination de la composition chimique des sols, isolation de la végétation, détermination de la composition chimique des océans, ou encore détermination de la quantité de pollution plastique dans les océans ou les fleuves.

L'homme du métier comprendra que les modes de réalisation et variantes précédemment décrits peuvent être combinés pour former de nouveaux modes de réalisation pourvu qu'ils soient compatibles techniquement.

## Revendications

1. Spectromètre (10) comprenant :
- une fente (12) propre à recevoir un faisceau lumineux,
- un détecteur (14),
- un réseau de diffraction (16) présentant au moins une courbure,
- une lentille aller (18) propre à envoyer le faisceau lumineux issu de la fente (12) sur le réseau de diffraction (16) de sorte à obtenir une pluralité de faisceaux diffractés,
- un miroir de renvoi (20) propre à réfléchir la pluralité de faisceaux diffractés, et
- une lentille retour (22) propre à recevoir la pluralité de faisceaux diffractés réfléchis par le miroir de renvoi (20) et à focaliser la pluralité de faisceaux diffractés sur le détecteur (14),
au moins une optique, dite optique optimisée, parmi la lentille aller (18), le miroir de renvoi (20) et la lentille retour (22), ayant été optimisée de sorte à améliorer la qualité image de l'image générée par le détecteur (14) à partir de la pluralité de faisceaux diffractés.

2. Spectromètre (10) selon la revendication 1, dans lequel la lentille aller (18), le réseau de diffraction (16), le miroir de renvoi (20) et la lentille retour (22) sont les seules optiques du spectromètre (10), et dans lequel le réseau de diffraction (16) est un réseau de diffraction en réflexion.

3. Spectromètre (10) selon la revendication 1 ou 2, dans lequel la ou chaque optique optimisée est une optique Freeform.

4. Spectromètre (10) selon l'une quelconque des revendications 1 à 3, dans lequel le spectromètre (10) comprend deux optiques optimisées.

5. Spectromètre (10) selon l'une quelconque des revendications 1 à 4, dans lequel au moins une optique optimisée est le miroir de renvoi (20).

6. Spectromètre (10) selon l'une quelconque des revendications 1 à 5, dans lequel au moins une optique optimisée est la lentille retour (22).

7. Spectromètre (10) selon l'une quelconque des revendications 1 à 6, dans lequel la lentille aller (18) est une lentille sphérique.

8. Spectromètre (10) selon l'une quelconque des revendications 1 à 7, dans lequel le réseau de diffraction (16) est sphérique.

9. Spectromètre (10) selon l'une quelconque des revendications 1 à 8, dans lequel la lentille aller (18) et la lentille retour (22) présentent des puissances différentes de sorte que le grandissement du spectromètre (10) est différent de un.

10. Spectromètre (10) selon l'une quelconque des revendications 1 à 8, dans lequel la puissance de chacune de la lentille aller (18) et de la lentille retour (22) est choisie de sorte que le grandissement du spectromètre (10) soit compris entre 0,2 et 5.

11. Procédé de conception optique d'un spectromètre (10) selon l'une quelconque des revendications 1 à 10, le procédé étant mis en œuvre par ordinateur au moyen d'un outil de conception optique, le procédé comprenant :
- le chargement, dans l'outil de conception optique, d'un spectromètre (10) de type Dyson comprenant :
• une fente (F) propre à recevoir un faisceau lumineux,
• un détecteur (D),
• un réseau de diffraction (R) présentant au moins une courbure,
• une lentille (L) à double passage propre à, d'une part, envoyer le faisceau lumineux issu de la fente (F) sur le réseau de diffraction (R) de sorte à obtenir une pluralité de faisceaux diffractés, et d'autre part, à focaliser la pluralité de faisceaux diffractés sur le détecteur (D),
- le dédoublement de la lentille (L) à double passage de sorte à obtenir :
• une lentille aller (18) propre à envoyer le faisceau lumineux issu de la fente (F) sur le réseau de diffraction (R) pour obtenir une pluralité de faisceaux diffractés, et
• une lentille retour (22) propre à focaliser la pluralité de faisceaux diffractés sur le détecteur (D),
- l'ajout d'un miroir de renvoi (20),
- le réagencement de la lentille aller (18), de la lentille retour (22) et du miroir de renvoi (20) de sorte à séparer spatialement la fente (F) et le détecteur (D) et à ce que le miroir de renvoi (20) soit propre à réfléchir la pluralité de faisceaux diffractés vers la lentille retour (22),
- l'optimisation d'au moins une optique, dite optique optimisée, parmi la lentille aller (18), le miroir de renvoi (20) et la lentille retour (22), de sorte à améliorer la qualité image de l'image générée par le détecteur (D) à partir de la pluralité de faisceaux diffractés, et
- le réagencement de la fente (F), du détecteur (D), du réseau de diffraction (R), de la lentille aller (18), de la lentille retour (22) et du miroir de renvoi (20) pour obtenir un spectromètre (10) aménageable mécaniquement.
